# EUROPEAN PATENT APPLICATION

(11) **EP 4 621 351 A1**
(43) Date of publication of application: **24.09.2025**
(21) Application number: 25159943.7
(22) Date of filing: 25.02.2025
(51) Int. Cl.: G01C 21/00, G01S 13/91, G08G 5/54, G08G 5/55, G08G 5/57

(54) **APPARATUSES, COMPUTER-IMPLEMENTED METHODS, AND COMPUTER PROGRAM PRODUCTS FOR VEHICLE LANDING GUIDANCE**

(30) Priority: 22.03.2024 IN 202411022275; 03.05.2024 US 202418654657
(71) Applicant: Honeywell International Inc., Charlotte, NC 28202 (US)
(72) Inventor: K, Faiz Habeeb, Charlotte, 28202 (US); SRIKONDA, Ramu Rajaneesh, Charlotte, 28202 (US)
(74) Representative: Haseltine Lake Kempner LLP

(57) **Abstract**

Embodiments of the disclosure provide for improved landing guidance generation. In the context of a method, the method includes generating initial landing guidance for a vehicle respective to a landing site based on location data associated with the vehicle; rendering a GUI comprising the initial landing guidance on a display of a computing device associated with controlling the vehicle; detecting a UWB signal from at least one of a plurality of UWB beacons located proximate to the landing site via communication between a UWB transceiver of the vehicle and the UWB beacons; in response to detecting the UWB signal, generating precise landing guidance for the vehicle respective to the landing site based on the UWB communication; and updating the GUI based on the precise landing guidance, wherein the precise landing guidance instructs navigation of the vehicle to the landing site.

## Description

### CROSS REFERENCE TO RELATED APPLICATIONS

This application claims the benefit of and priority to India Provisional Application No. 202411022275, filed March 22, 2024, entitled "APPARATUSES, COMPUTER-IMPLEMENTED METHODS, AND COMPUTER PROGRAM PRODUCTS FOR VEHICLE LANDING GUIDANCE," the disclosure of which is incorporated herein by reference in its entirety.

### TECHNOLOGICAL FIELD

Embodiments of the present disclosure are generally directed to generating and rendering assistive navigational guidance.

### BACKGROUND

Typical approaches to landing a vehicle rely upon satellite location data, compass data, visual observation, and/or the like. For example, a vehicle operator may utilize satellite and compass signals to estimate vehicle position for purposes of navigating the vehicle to a landing site. However, structures proximate to a landing site may reflect, absorb, scatter, or cause other interferences to satellite signals and compass signals. As a result, vehicle position estimations, landing site estimations, and/or the like may deviate from true values and reduce the accuracy and safety of landing guidance and vehicle navigation.

Applicant has discovered various technical problems associated with providing accurate guidance for landing a vehicle. Through applied effort, ingenuity, and innovation, Applicant has solved many of these identified problems by developing the embodiments of the present disclosure, which are described in detail below.

### BRIEF SUMMARY

In general, embodiments of the present disclosure herein provide for generation of precise landing guidance for assisting a vehicle operator in navigation of a vehicle to a landing site based at least in part on ultra-wideband (UWB) communication between a UWB transceiver of the vehicle and a plurality of UWB beacons located proximate to the landing site. For example, embodiments of the present disclosure provide for generating precise landing guidance in response to detecting communication between the UWB transceiver of the vehicle and one or more of the UWB beacons proximate to the landing site, which may indicate that the vehicle is located within a predetermined range of the landing site. Further, a graphical user interface (GUI) comprising the precise landing guidance may be rendered on a display of the vehicle, a display of a control station configured to control movement of the vehicle, and/or the like. The precise landing guidance may improve the accuracy and precision of a pilot, control station operator, and/or the like in navigating the vehicle to the landing site.

In various embodiments, by utilizing data from the UWB communication, the present method, apparatus, and computer program product may demonstrate greater accuracy and precision in estimating current vehicle position and trajectory more accurately as compared to existing approaches, which utilize signals that are more vulnerable to reflection, absorption, and other interferences. For example, existing approaches to generating landing guidance utilize satellite-based location data, compass data, inertial measurement data, video feeds, and/or the like from satellite-positioning systems, compasses, inertial measurements units (IMUSs), and cameras aboard a vehicle. However, such signals may experience greater interference, disruption, and/or the like when the vehicle is within a predetermined range of a landing site. For example, when landing in urban environments, buildings and other vehicles may reflect, absorb, or cause other interferences to readings from onboard satellite-based positioning systems, compasses, and IMUs. As another example, congested vehicle traffic, dense urban infrastructure, precipitation conditions, nighttime conditions, smog and/or the like may reduce the usefulness of video feeds from onboard cameras. Due to the signal interferences and/or video feed deficiencies, existing approaches may miscalculate vehicle position on approach to the landing site and, as a result, such approaches may generate inaccurate landing guidance. Further, the maximum precision of estimating vehicle position by such approaches may be limited to several meters. Safe vehicle navigation and landing in congested and urban environments may require centimeter-level position precision and, as a result, existing approaches may be inadequate for meeting the more stringent exigencies of urban vehicle navigation.

To overcome these technical challenges, various embodiments of the present disclosure utilize data from UWB communication as an alternative or additional input to estimating vehicle location and generating landing guidance for navigating the vehicle to the landing site. The UWB signals demonstrate lower vulnerability to reflection, absorption, and other interferences as compared to satellite-based signals, compass-based signals, and inertial measurements. Further, UWB data may provide centimeter-level precision for estimating vehicle position and trajectory. These advantages may enable more accurate estimation of current vehicle position and trajectory. As a result, the present method, apparatus, and computer program product may generate more precise landing guidance for navigating a vehicle to a landing site. Other implementations for generating landing guidance will be, or will become, apparent to one with skill in the art upon examination of the following figures and detailed description. It is intended that all such additional implementations be included within this description be within the scope of the disclosure, and be protected by the following claims.

In accordance with a first aspect of the disclosure, a computer-implemented method for improved landing guidance is provided. The computer-implemented method is executable utilizing any of a myriad of computing device(s) and/or combinations of hardware, software, firmware. In some example embodiments an example computer-implemented method includes generating initial landing guidance for a vehicle respective to a landing site based on location data associated with the vehicle; rendering a graphical user interface (GUI) comprising the initial landing guidance on a display of a computing device associated with controlling the vehicle; detecting an ultra-wideband (UWB) signal from at least one of a plurality of UWB beacons located proximate to the landing site via communication between at least one UWB transceiver of the vehicle and the plurality of UWB beacons located proximate to the landing site; in response to detecting the UWB signal, generating precise landing guidance for the vehicle respective to the landing site based at least in part on the UWB communication between the UWB transceiver of the vehicle and the plurality of UWB beacons located proximate to the landing site; and updating the rendering of the GUI based at least in part on the precise landing guidance, wherein the precise landing guidance instructs navigation of the vehicle to the landing site.

In some embodiments, the GUI comprising the initial landing guidance comprises a mapping of an area comprising a current location of the vehicle based at least in part on the location data. In some embodiments, a rendering of the precise landing guidance on the GUI comprises a three-dimensional mapping of a second area comprising an updated current location of the vehicle, the landing site, and a plurality of structures. In some embodiments, the method further comprises generating the updated current location of the vehicle and the precise landing guidance based at least in part on: the UWB communication between the UWB transceiver of the vehicle and the plurality of UWB beacons; and additional location data associated with the vehicle. In some embodiments, the method further comprises applying a first weight value to respective UWB data associated with the UWB communication between the UWB transceiver of the vehicle and the plurality of UWB beacons; and applying a second weight value to the additional location data associated with the vehicle, wherein the first weight value represents a greater impact value than the second weight value. In some embodiments, the rendering of the precise landing guidance on the GUI further comprises a trajectory through the second area, wherein: the trajectory directs to a respective surface of a subset of the plurality of structures that comprises the landing site and at least a subset of the plurality of UWB beacons located proximate to the landing site.

In some embodiments, the method further comprises updating the GUI based at least in part on the precise landing guidance comprises rendering the subset of the plurality of structures in a particular color to indicate at least one of i) a presence of the landing site, or ii) the subset of the plurality of UWB beacons located proximate to the landing site. In some embodiments, the location data comprises satellite-based location data. In some embodiments, the location data comprises compass data. In some embodiments, the location data comprises inertial measurement data. In some embodiments, the method further comprises generating the precise landing guidance for the vehicle respective to the landing site further based at least in part on a passenger count associated with the vehicle. In some embodiments, the method further comprises generating the precise landing guidance for the vehicle respective to the landing site further based at least in part on a weight associated with the vehicle. In some embodiments, the method further comprises generating the precise landing guidance for the vehicle respective to the landing site further based at least in part on a vehicle type associated with the vehicle.

In some embodiments, the precise landing guidance comprises a landing speed. In some embodiments, the precise landing guidance further comprises a landing angle. In some embodiments, the initial landing guidance comprises a topographic map of an area comprising the landing site; and the precise landing guidance comprises a photogrammetry map of a subset of the area, wherein the subset of the area comprises the landing site. In some embodiments, the photogrammetry map further comprises light detection and ranging (LiDAR) data associated with the subset of the area. In some embodiments, the method further comprises generating the precise landing guidance further based at least in part on the location data, wherein: the location data comprises at least one of satellite-based location data, compass data, or inertial measurement data. In some embodiments, the computing device is aboard the vehicle. In some embodiments, the computing device embodies a control station configured to remotely control the vehicle.

In accordance with another aspect of the present disclosure, a computing apparatus for improved landing guidance is provided. The computing apparatus in some embodiments includes at least one processor and at least one non-transitory memory, the at least non-transitory one memory having computer-coded instructions stored thereon. The computer-coded instructions in execution with the at least one processor causes the apparatus to perform any one of the example computer-implemented methods described herein. In some other embodiments, the computing apparatus includes means for performing each step of any of the computer-implemented methods described herein.

In accordance with another aspect of the present disclosure, a computer program product for improved landing guidance is provided. The computer program product in some embodiments includes at least one non-transitory computer-readable storage medium having computer program code stored thereon. The computer program code in execution with at least one processor is configured for performing any one of the example computer-implemented methods described herein.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 illustrates a block diagram of a networked environment that may be specially configured within which embodiments of the present disclosure may operate.
FIG. 2 illustrates a block diagram of an example apparatus that may be specially configured in accordance with at least some example embodiments of the present disclosure.
FIG. 3 illustrates an example data architecture in accordance with at least some example embodiments of the present disclosure.
FIG. 4 illustrates an example sequence for generating initial landing guidance and precise landing guidance in accordance with at least some embodiments of the present disclosure.
FIG. 5 illustrates a computing device having rendered thereon an example GUI in accordance with at least some embodiments of the present disclosure.
FIG. 6 illustrates a computing device having rendered thereon an example GUI in accordance with at least some embodiments of the present disclosure.
FIG. 7 illustrates a flowchart depicting operations of an example process for generating precise landing guidance in accordance with at least some example embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### Overview

Embodiments of the present disclosure provide a myriad of technical advantages in the technical field of generating landing guidance for instructing navigation of a vehicle to a landing site. Typically, landing guidance is generated based upon data from satellite-based position systems onboard vehicles. For example, in an aerial context, a glide path for landing an aerial vehicle on a runway may be generated based on data from a global positioning system (GPS) and/or the like. In such approaches, the landing guidance may be inaccurate due to deficiencies in the input data. For example, in an urban environment, dense packing of structures, vehicle traffic, radio towers, high metallic presence, and/or the like may reflect, absorb, or cause other interferences to satellite-based signals, compass signals, image data, and/or the like. In addition, satellite-based approaches may offer a maximum position accuracy of 100 cm, which may be insufficient for precise navigation in densely structured environments, such as urban centers. As a result, estimates of vehicle location and trajectory to a landing site may differ from true values. Inaccurate landing guidance may reduce safety and efficiency of vehicle operation.

Embodiments of the present disclosure overcome the technical challenges of instructing navigation of a vehicle to a landing site by generating precise landing guidance based at least in part on ultra-wideband (UWB) communication between a UWB transceiver onboard the vehicle and a plurality of UWB beacons located proximate to the landing site. The various embodiments of the present disclosure may provide the precise landing guidance to an operator of the vehicle (e.g., onboard pilot, remote operator, and/or the like) via graphical user interfaces rendered on a display of a computing device configured to control the vehicle. In doing so, the present disclosure may enable safer, more accurate, and more efficient navigation of a vehicle to a landing site as compared to previous landing guidance techniques. In particular, the present disclosure may provide robust navigation performance in dense urban environments where existing landing guidance approaches commonly experience degradation in navigation accuracy.

### Definitions

"Vehicle" refers to any apparatus that traverses throughout an environment by any mean of travel. In some contexts, a vehicle transports goods, persons, and/or the like, or traverses itself throughout an environment for any other purpose, by means of air, sea, or land. In some embodiments, a vehicle is ground-based, air-based, water-based, space-based (e.g., outer space or within an orbit of a planetary body, a natural satellite, or artificial satellite), and/or the like. In some embodiments, the vehicle is an aerial vehicle capable of air travel. Non-limiting examples of aerial vehicles include urban air mobility vehicles, drones, helicopters, fully autonomous air vehicles, semi-autonomous air vehicles, airplanes, orbital craft, spacecraft, rotorcraft, and/or the like. In some embodiments, the vehicle is piloted by a human operator onboard the vehicle. For example, in an aerial context, the vehicle may be a commercial airliner operated by a flight crew. In some embodiments, the vehicle is remotely controllable such that a remote operator may initiate and direct movement of the vehicle. Additionally, in some embodiments, the vehicle is unmanned. For example, the vehicle may be a powered, aerial vehicle that does not carry a human operator and is piloted by a remote operator using a control station. In some embodiments, the vehicle is an aquatic vehicle capable of surface or subsurface travel through and/or atop a liquid medium (e.g., water, water-ammonia solution, other water mixtures, and/or the like). Non-limiting examples of aquatic vehicles include unmanned underwater vehicles (UUVs), surface watercraft (e.g., boats, jet skis, and/or the like), amphibious watercraft, hovercraft, hydrofoil craft, and/or the like. As used herein, vehicle may refer to vehicles associated with urban air mobility (UAM).

"UAM" refers to urban air mobility, which includes all aerial vehicles and functions for aerial vehicles that are capable of performing vertical takeoff and/or vertical landing procedures. Non-limiting examples of UAM aerial vehicles include passenger transport vehicles, cargo transport vehicles, small package delivery vehicles, unmanned aerial system services, autonomous drone vehicles, and ground-piloted drone vehicles, where any such vehicle is capable of performing vertical takeoff and/or vertical landing. In various embodiments, the method, apparatus, and computer program product described herein are configured to generate landing guidance for UAM vehicles. In at least a subset of such embodiments, the method, apparatus, and computer program product generate precise landing guidance based at least in part on UWB communication between a UAM vehicle and a plurality of UWB beacons located proximate to a landing site.

"Landing site" refers to any location at which a vehicle may be statically positioned. For example, a landing site may embody a designated portion of a structure at which a vehicle may be docked or parked, such as a rooftop, helipad, holding bay, and/or the like. As another example, in an aerial context, a landing site may embody a vertiport, vertistop, and/or the like at which an aerial vehicle may be landed for purposes of storing the vehicle, fueling the vehicle, managing a payload of the vehicle, servicing the vehicle, and/or the like.

"Landing guidance" refers to any data that may be provided to an operator of a vehicle to instruct navigation of a vehicle to a landing site. For example, landing guidance may include a trajectory for steering a vehicle to a landing site. The landing guidance may further include a map of an area comprising the landing site, where the trajectory indicates a pathway through the area to the landing site. The map may be a topographic map, three-dimensional (3D) map, and/or the like. The map may include visual representations of structures within the area, such as buildings, landing sites, other vehicles, and/or the like. The map may include a color scheme for indicating a structure or region within the area that comprises a landing site. In another example, landing guidance may include a landing angle, landing speed, estimated landing timestamp, an interval between a current timestamp and an estimated landing timestamp, and/or the like. In some embodiments, landing guidance is rendered on a display of a computing device associated with controlling a vehicle. For example, a GUI may be rendered on a display onboard a vehicle (e.g., a cockpit display, in some contexts) or a display of a control station associated with controlling a vehicle, where the GUI includes a 3D photogrammetry map of an area comprising a landing site and a rendered trajectory for navigating a vehicle to the landing site. The GUI may further include a target landing speed, target landing angle, current distance to the landing site, direction of the landing site, and/or the like.

"Precise landing guidance" refers to any landing guidance that is generated based at least in part on data associated with UWB communication between a UWB transceiver of a vehicle and one or more UWB beacons. For example, precise landing guidance may include a trajectory for steering a vehicle to a landing site, where the trajectory is generated based at least in part on UWB data derived from UWB communication between a UWB transceiver of a vehicle and a plurality of UWB beacons located proximate to the landing site. The precise landing guidance may be generated based at least in part on an estimated current position, trajectory, speed, and/or the like of the vehicle, where said estimated data is generated based at least in part on UWB data. For example, precise landing guidance may include a 3D photogrammetry map of an area comprising the landing site, where the map further comprises one or more indicia that indicate a current position of the vehicle respective to a landing site. The current position of the vehicle respective to the landing site may be generated based at least in part on UWB communication between the UWB transceiver of the vehicle and a plurality UWB beacons located within the area, such as a set of four UWB beacons that demarcate the landing site.

"Initial landing guidance" refers to any landing guidance that is generated based at least in part on data associated with a vehicle, where said excludes data associated with UWB communication between the UWB transceiver of the vehicle and one or more UWB beacons. For example, initial landing guidance may embody landing guidance that is generated based at least in part on satellite-based positioning data, compass data, inertial measurement data, image data, and/or the like.

### Example Systems and Apparatuses of the Disclosure

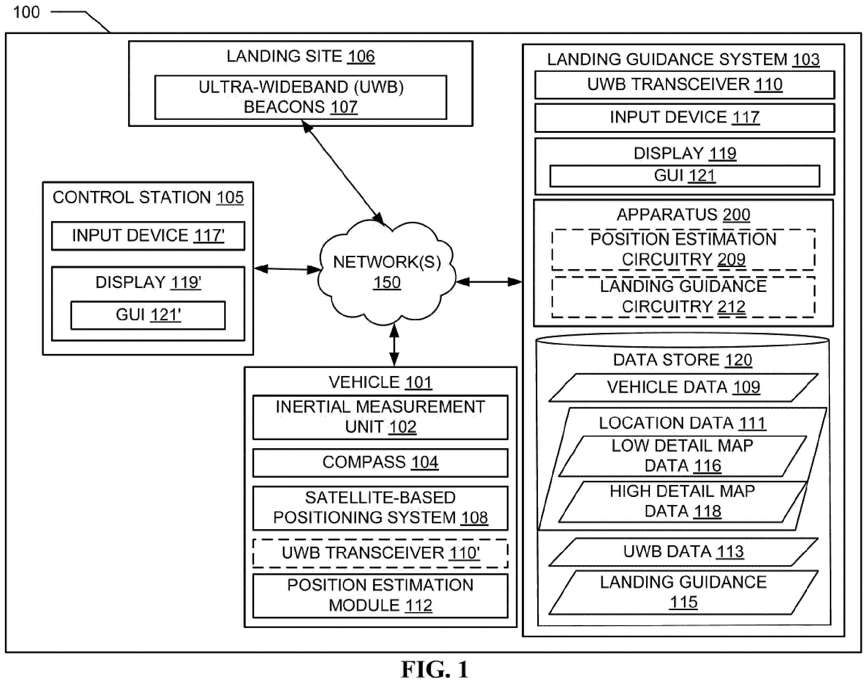

FIG. 1 illustrates a block diagram of a networked environment that may be specially configured within which embodiments of the present disclosure may operate. Specifically, FIG. 1 depicts an example networked environment 100. As illustrated, the networked environment 100 includes one or more vehicles 101, a landing guidance system 103, a control station 105, and a landing site 106 comprising a plurality of UWB beacons 107. In some embodiments, area comprising the landing site 106 includes additional UWB beacons 107. For example, an area may include a plurality of rooftops including a particular rooftop embodying a landing site 106. The particular rooftop may include a plurality of UWB beacons 107 demarcating the landing site 106. In addition, one or more of a remaining subset of the plurality of rooftops may include UWB beacons 107 such that a vehicle 101 may communicate with multiple sets of UWB beacons on approach to the landing site 106 (e.g., the UWB communications being utilized by the landing guidance system 103 to generate and provision precise landing guidance).

In some embodiments, the landing guidance system 103 is configured to provide data to and receive data from one or more vehicles 101, one or more control stations 105, and/or the like. For example, the landing guidance system 103 may receive vehicle data, location data 111, UWB data 113, and/or the like from a control station 105, vehicle 101, or UWB beacon 107. The landing guidance system 103 may generate landing guidance 115 based at least in part on the received data and cause rendering of GUIs based at least in part on the landing guidance. In some embodiments, the vehicle 101 comprises the landing guidance system 103. For example, in an aerial context, one or more elements of the landing guidance system 103 may be implemented as instrument-on-cockpit of the aerial vehicle. In such contexts, one or more elements of the landing guidance system 103 may be embodied independently by particular hardware, software, firmware, and/or the like that is/are located aboard the vehicle. Alternatively, in some embodiments, the landing guidance system 103 embodies a computing environment that is remote from the vehicle 101.

In some embodiments, the landing guidance system 103 includes a UWB transceiver 110 configured to communicate with one or more UWB beacons 107. The UWB transceiver 110 may be onboard the vehicle 101 (e.g., as denoted in FIG. 1 as UWB transceiver 110'). In some embodiments, the landing guidance system 103 includes one or more input devices 117 by which instructions or commands for controlling a vehicle 101 are received via user input provided to an input device. For example, in an aerial context, the input device 117 may embody one or more cockpit controls. In some embodiments, the input device 117 receives user inputs for defining a payload of the vehicle 101 (e.g., passenger count, cargo amount, and/or the like), a weight of the vehicle, a travel pathway of the vehicle, and/or the like. In another example, the input device 117 may receive user inputs for controlling movement of the vehicle 101, such as inputs for controlling vertical and horizontal movement of the vehicle to direct the vehicle to a landing site 106. In another example, the input device 117 may receive user inputs for other vehicles, control stations, and/or the like. In some embodiments, the input device 117 includes one or more buttons, cursor devices, joysticks, touch screens, including three-dimensional or pressure-based touch screens, camera, finger-print scanners, accelerometer, retinal scanner, gyroscope, magnetometer, or other input devices. In some embodiments, the input device 117 includes one or more vehicle controls (e.g., joysticks, thumbsticks, yokes, steering wheels, accelerator control, thrust control, brake control, and/or the like) an onboard operator to navigate the vehicle 101 toward or onto a landing site 106 based at least in part on renderings of landing guidance 115.

In some embodiments, includes one or more displays 119 by which data corresponding to one or more vehicles 101 and/or landing sites 106 is/are displayed to an operator of a vehicle 101. For example, the display 119 may include renderings of graphical user interfaces 121 comprising landing site mappings and landing guidance. In some embodiments, the display 119 includes a CRT (cathode ray tube), LCD (liquid crystal display) monitor, LED (light-emitting diode) monitor, touchscreen monitor, and/or the like, for displaying information/data to an operator of the vehicle 101.

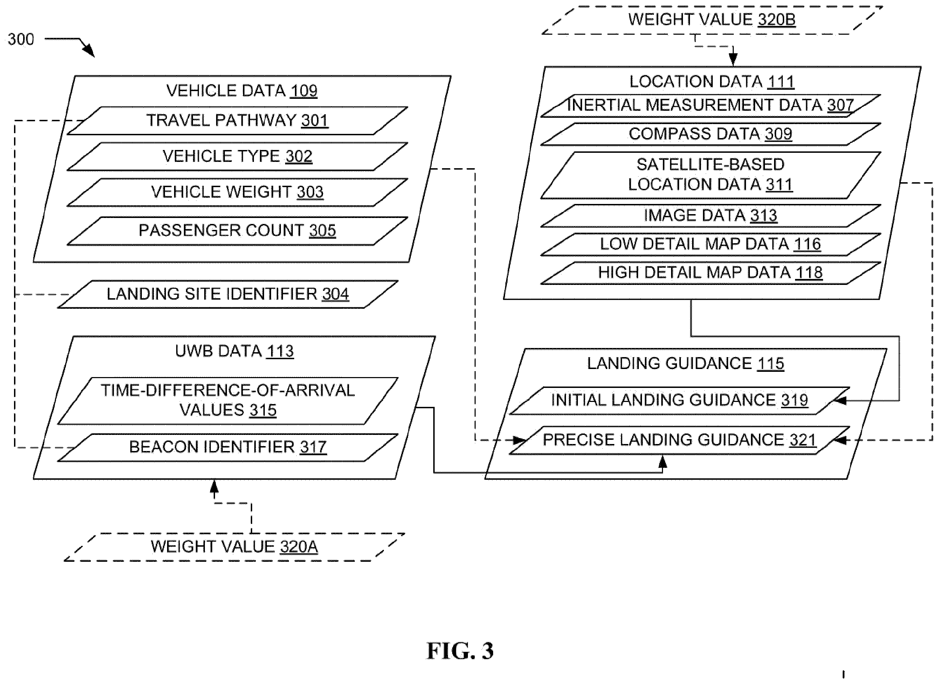

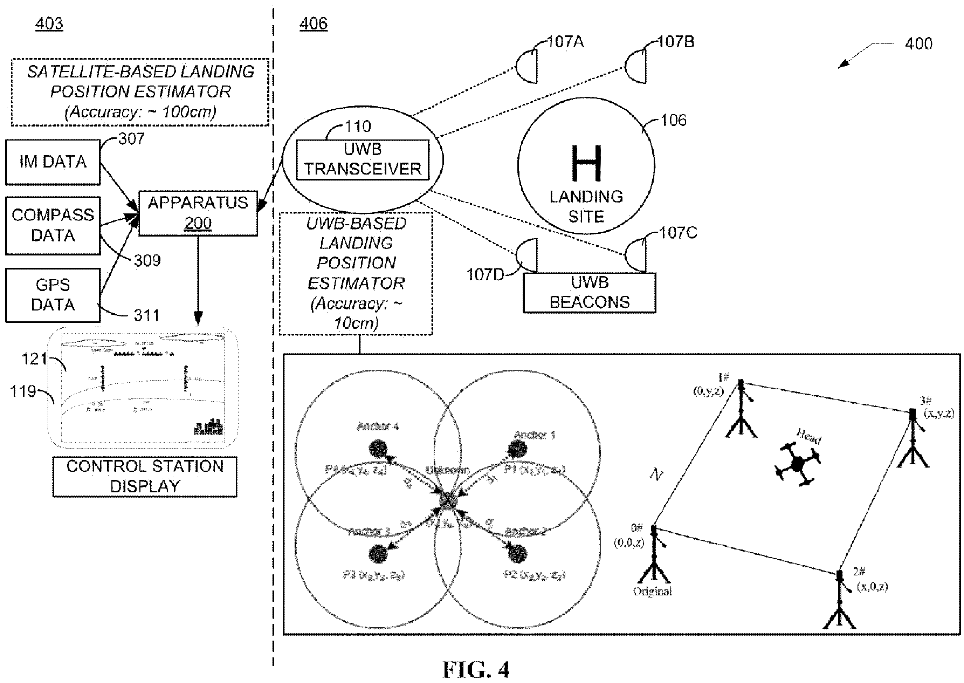

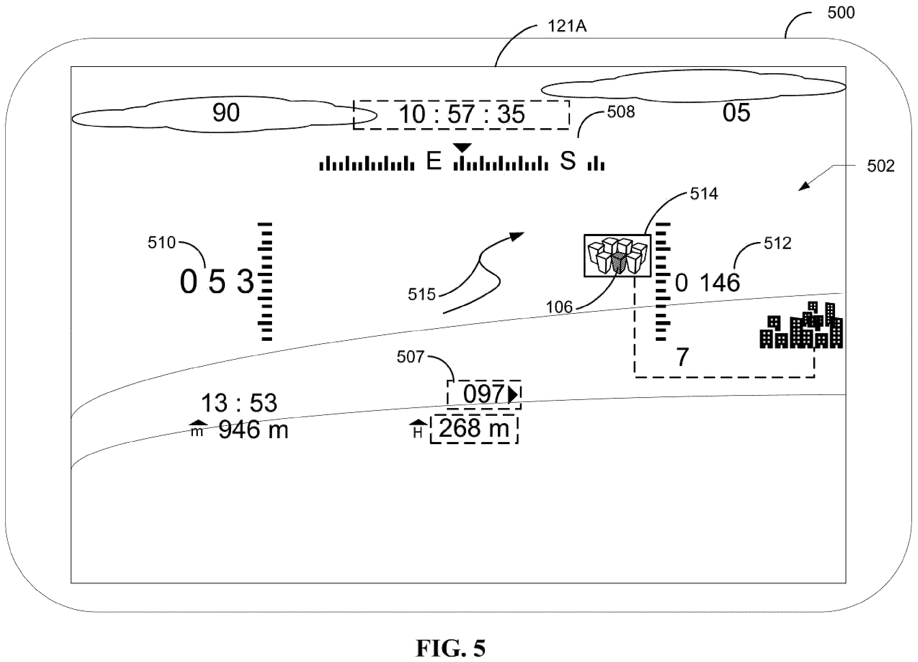

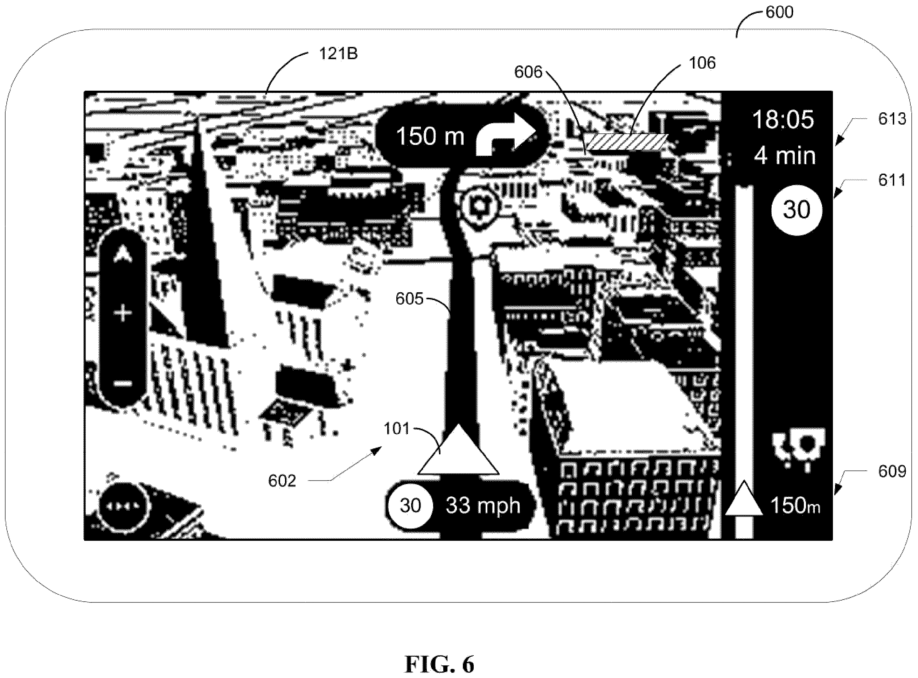

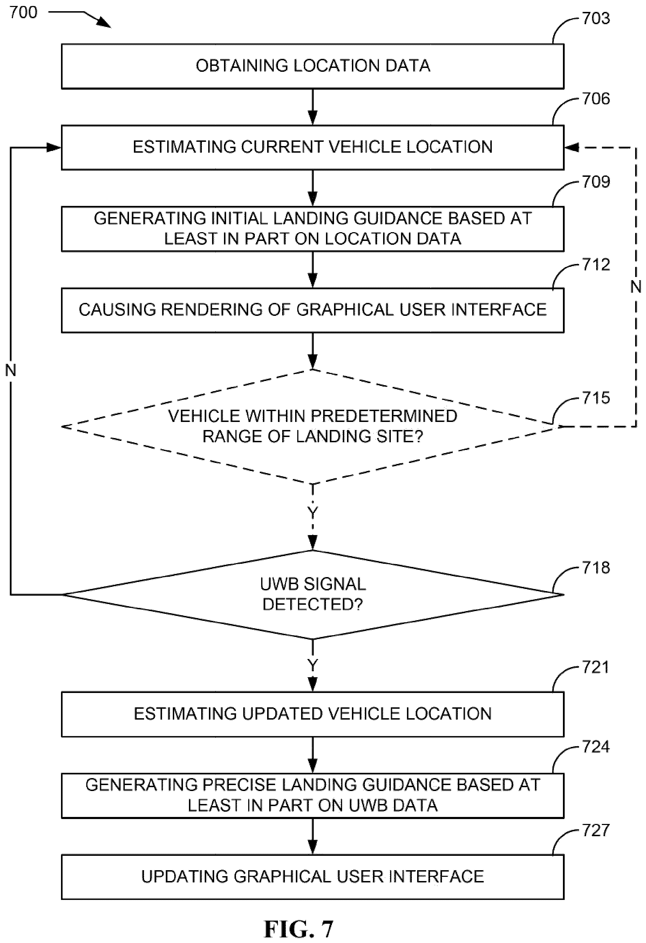

In some embodiments, the landing guidance system 103 includes an apparatus 200 configured to perform various functions and actions related to enacting techniques and processes described herein for processing vehicle data 109, location data 111, and UWB data 113, generating landing guidance 115, causing rendering of GUIs 121 on a display 119 (or display 119' of one or more control stations 105), and/or the like. For example, the apparatus 200 may maintain the data architecture 300 shown in FIG. 3 and described herein. As another example, the apparatus 200 may perform the sequence 400 and process 700 shown in FIGS. 4 and 7, respectively, and described herein. In still another example, the apparatus 200 may generate and cause rendering of GUIs 121A, 121B as shown in FIGS. 5 and 6, respectively, and described herein.

In some embodiments, the landing guidance system 103 includes one or more data stores 120. The various data in the data store 120 may be accessible to one or more of the apparatus 200, the vehicle 101, the control station 105 and/or the like. The data store 120 may be representative of a plurality of data stores 120 as can be appreciated. The data stored in the data store 120, for example, is associated with the operation of the various applications, apparatuses, and/or functional entities described herein. The data stored in the data store 120 may include, for example, vehicle data 109, location data 111, UWB data 113, landing guidance 115, and/or the like.

In some embodiments, vehicle data 109 includes any data associated with a vehicle 101. In some embodiments, the vehicle data 109 includes one or more vehicle identifiers that uniquely identify the vehicle 101. In some embodiments, the vehicle data 109 includes one or more control station identifiers that uniquely identify a respective control station 105 in control of the vehicle 101. In some embodiments, the vehicle data 109 includes an association of the vehicle 101 with one or more vehicle classifications. A vehicle classification may include a vehicle type, vehicle mission, payload classification (e.g., cargo, passengers, and/or the like), safety classification, and/or the like. For example, a vehicle classification may associate a vehicle with a particular type, such as multirotor drone, fixed-wing craft, microcraft, large craft, passenger craft, cargo craft, and/or the like. In another example, a vehicle classification may include a maximum landing speed, minimum landing speed, maximum landing angle, minimum landing angle, maximum banking angle, and other rules or thresholds related to safe operation of the vehicle 101. In some embodiments, the vehicle data 109 includes a vehicle weight, payload weight, and/or the like. In some embodiments, the vehicle data 109 identifies a payload of the vehicle. For example, the vehicle data 109 may include a count of passengers and/or an amount of cargo aboard the vehicle 101. In some embodiments, the vehicle data 109 includes a travel pathway for the vehicle 101. The travel pathway may be a course of travel for the vehicle between an origin point and a destination, which may embody a landing site 106.

In some embodiments, the location data 111 includes low detail map data 116, high detail map data 118, and/or the like. In some embodiments, the low detail map data 116 includes topographical maps, orthomosaic maps, satellite-generated maps, and/or the like. For example, the low detail map data 116 may include shuttle radar topography mission (SRTM) data. The low detail map data 116 may include two-dimensional representations of physical environments. Alternatively, in some embodiments, the low detail map data 116 may include three-dimensional topographical mappings. In some embodiments, the high detail map data 118 includes detailed three-dimensional mappings of one or more environments, including three-dimensional representations of terrain, structures, and/or the like. For example, the high detail map data 118 may include photogrammetry mappings of one or more areas. Additionally, or alternatively, the high detail map data 118 may include light detection and ranging (LiDAR)-based mappings of one or more areas.

Further, in some embodiments, location data 111 includes data from non-UWB-based sensors and systems aboard the vehicle 101. In some embodiments, the location data 111 includes satellite-based location data from one or more satellite-based positioning systems 108. For example, the location data 111 may include values of longitude, latitude, altitude, and/or the like from a global positioning system. In some embodiments, location data 111 includes compass data from a compass 104. For example, the location data 111 may include measurements of vehicle heading obtained from an onboard compass. In some embodiments, the location data 111 includes inertial measurements from one or more inertial measurement units (IMUs) 102. For example, the location data 11 may include measurements of vehicle acceleration, rotation, and/or the like that are generated by one or more accelerometers, gyroscopes, and/or the like onboard the vehicle 101. In some embodiments, the location data 111 includes image data from one or more cameras of the vehicle 101. For example, the location data 111 may include a video recording of an environment external to the vehicle.

In some embodiments, the location data 111 is provisioned from the vehicle 101 to the control station 105 to enable the control station 105 to provision the location data 111 to the apparatus 200 for processing. In some embodiments, the location data 111 includes data from one or more systems that are external to the vehicle 101. For example, the location data 111 may include data from one or more primary radar systems, secondary radar systems, and/or the like, where said data indicates an approximate position of the vehicle 101.

In some embodiments, UWB data 113 includes data associated with communication between a UWB transceiver 110, 110' and one or more UWB beacons 107. For example, the UWB data 113 may include one or more values of time-difference-of-arrival (TDOA) for UWB signal received from a respective beacon. As another example, the UWB data 113 may include one or more beacon identifiers obtained via processing of the UWB signal. In some embodiments, the apparatus 200, vehicle 101, control station 105, and/or the like is/are configured to identify a landing site 106 based at least in part on one or more identifiers obtained via communication between the UWB transceiver 110 and one or more UWB beacons 107 located proximate to the landing site 106. In some embodiments, UWB data 113 includes a signal waveform indicative of signal strength, frequency, TDOA, and/or the like over one or more time intervals.

In some embodiments, the location data 111, UWB data 113, and/or the like include respective weight values that may be applied by the apparatus 200 to the corresponding data during estimation of vehicle position and/or generation of landing guidance 115. For example, the location data 111 may include or be associated with one or more first weight values that are applied to the location data when the vehicle 101 is beyond a predetermined range of a landing site 106. The location data 111 may further include (or be associated with) one or more secondary weight values that are applied to the location data when the vehicle 101 is within the predetermined range of the landing site, where a respective first weight value exceeds a respective secondary weight value. As another example, the UWB data 113 may include or be associated with one or more first weight values that are applied to the location data when the vehicle 101 is beyond a predetermined range of a landing site 106. The UWB data 113 may further include (or be associated with) one or more secondary weight values that are applied to the location data when the vehicle 101 is within the predetermined range of the landing site, where a respective secondary weight value exceeds a respective first weight value.

In some embodiments, landing guidance 115 includes data that may be provided to an operator of a vehicle to instruct navigation of a vehicle to a landing site. In some embodiments, landing guidance 115 includes a landing trajectory for instructing horizontal movement and/or vertical movement of a vehicle 101 through an area to a landing site 106. In some embodiments, landing guidance 115 includes a mapping of an area comprising a landing site 106. In some embodiments, the mapping includes one or more structures proximate to or embodying the landing site 106. For example, the mapping may embody a 3-D mapping of an area comprising a landing site 106 and a plurality of structures. The mapping may include a coloring scheme that, upon rendering of a GUI comprising the mapping, enables visual indication one of the plurality of structures that comprises the landing site 106 and one or UWB beacons 107. Additionally, in some embodiments, the coloring scheme enables visual indication of one or more structures in the area that comprise additional UWB beacons that are not part of a landing site 106. In some embodiments, the landing guidance 115 includes a landing speed, landing angle, banking angle, landing time, and/or the like.

In some embodiments, the landing guidance 115 includes a first subset associated with location data 111 and a second subset associated with UWB data 113, where the second subset may be referred to as "precise" landing guidance. In some embodiment, the subset of landing guidance 115 associated with location data 111 includes a topographic map of an area comprising a landing site. The subset may further include a current position of the vehicle 101, such as a latitude, longitude, altitude, compass heading, speed, time to arrival, and/or the like. In some embodiments, the subset of landing guidance 115 associated with UWB data 113 includes a 3-D photogrammetry map of a subset of the area comprising the landing site 106. The subset may further include light detection and ranging (LiDAR) data associated with the subset of the area, where the LiDAR data indicates 3-D compositions of structures within the subset of the area (e.g., buildings, vehicle infrastructure, landing sites, other vehicles, and/or the like). In some embodiments, the subset of landing guidance 115 associated with the UWB data 113 further includes a mapping of the UWB beacons 107 that are located proximate to the landing site 106 such that the beacon indications may visually demarcate the bounds of the landing site 106.

Additional example aspects of the vehicle data 109, location data 111, UWB data 113, and landing guidance 115 are shown in the data architecture 300 depicted in FIG. 3 and described herein.

In some embodiments, the apparatus 200 is configured to receive vehicle data 109 from a vehicle 101, control station 105, and/or the like. For example, the apparatus 200 may receive location data 111 from the control station 105 or vehicle 101, the location data including satellite-based location data, compass data, inertial measurement data, and/or the like. In some embodiments, the apparatus 200 is configured to determine a proximity of the vehicle 101 to a landing site 106. For example, based at least in part on location data 111, the apparatus 200 may determine whether the location data 111 has moved within a predetermined range (e.g., 2 kilometers, 200 meters, or another suitable value) of an area comprising a landing site 106.

In some embodiments, the apparatus 200 is configured to control operation of one or more aspects of the vehicle 101. Additionally, or alternatively, the apparatus 200 may cause the control station 105 to adjust one or more aspects of the vehicle 101. For example, the apparatus 200 may cause the vehicle 101 (or cause the control station 105 to command the vehicle 101) to transition from a first navigational mode to a second navigational mode. In the first navigational mode, the vehicle 101 may generate readings via an onboard inertial measurement unit (IMU) 102, compass 104, satellite-based positioning system 108, and/or the like to enable estimation of vehicle position based at least in part on inertial measurement data, compass data, and/or satellite-based location data. In the second navigational mode, the vehicle may communicate with a plurality of UWB beacons 107 proximate to a landing site 106 via an onboard UWB transceiver 110 to enable estimation of vehicle estimation based at least in part on the UWB communication between the vehicle 101 and the plurality of UWB beacons 107 (e.g., as an alternative or in addition to readings from the IMU 102, compass 104, satellite-based positioning system 108, and/or the like).

In some embodiments, the apparatus 200 is configured to generate landing guidance 115 for a vehicle 101 respective to a landing site 106 based at least in part on location data 111. For example, the apparatus 200 may generate landing guidance for a vehicle 101 based at least in part on compass data, inertial measurement data, satellite-based location data, and/or the like. The apparatus 200 may generate landing guidance based at least in part on the aforementioned data when the vehicle 101 is beyond a predetermined range of a landing site 106 and/or out of communication range with a UWB beacon 107. In some embodiments, the apparatus 200 generates precise landing guidance 115 for instructing navigation of a vehicle 101 to a landing site 106 based at least in part on UWB data 113 (e.g., the UWB data 113 being associated with UWB communication between one or more UWB beacons 107 and the UWB transceiver 110 and/or UWB transceiver 110' of the vehicle). The apparatus 200 may generate precise landing guidance in response to detecting UWB communication between the UWB transceiver 110, 110' and one or more UWB beacons 107.

Additionally, or alternatively, in some embodiments, the apparatus 200 generates the precise landing guidance in response to determining that the vehicle 101 has moved within a predetermined range of a landing site 106. For example, the UWB transceiver 110 may remain in an active state throughout navigation of the vehicle 101 along a travel pathway. The apparatus 200 may prioritize location data 111 for generating travel guidance while the vehicle 101 is beyond a predetermined range of a landing site 106. The apparatus 200 may prioritize UWB data 113 for generating precise landing guidance while the vehicle is within the predetermined range of the landing site 106. In some embodiments, the apparatus 200 performs data prioritization by applying weight values to particular data used as input for landing guidance generation. For example, when generating landing guidance for a vehicle that is beyond a predetermined range of a landing site (e.g., 200 meters or another suitable value), the apparatus 200 may apply a greater weight value to satellite-based location data, compass data, inertial measurement data, and/or the like as compared to a weight value (or lack thereof) applied to UWB data. As another example, when generating precise landing guidance for a vehicle that is within the predetermined range of the landing site, the apparatus 200 may apply a greater weight value to UWB data and a lesser weight value to the satellite-based location data, compass data, inertial measurement data, and/or the like.

In some embodiments, the apparatus 200 is configured to render (or cause rendering of) graphical user interfaces (GUIs) 121, 121' on one or more displays of a computing device configured to control the vehicle 101. For example, the apparatus 200 may cause rendering of a GUI 121 on a display 119 (e.g., said display being onboard a vehicle and accessible to an onboard operator). As another example, the apparatus 200 may cause rendering of a GUI 121' on a display 119' of a control station 105. The GUI 121 may include landing guidance 115, including initial landing guidance that is based on location data 111 (e.g., satellite-based location data, compass data, inertial measurement data), precise landing guidance that is based on UWB data 113, and/or the like. In some embodiments, the apparatus 200 is configured to render a GUI comprising location data-based landing guidance on the display 119 while the vehicle 101 is beyond a predetermined range of a landing site 106 and/or out of contact with one or more UWB beacons 107 located proximate to the landing site 106. In some embodiments, the apparatus 200 is configured to update the GUI 121 to include precise landing guidance (e.g., UWB data-based landing guidance) on the display 119 in response to i) determining the vehicle 101 is within a predetermined range of the landing site 106, and/or ii) detecting UWB communication between the UWB transceiver 110 of the vehicle 101 and one or more UWB beacons 107 located proximate to the landing site.

In some embodiments, the control station 105 is configured to provide data to and receive data from one or more vehicles 101, the landing guidance system 103, and/or the like. In various embodiments, the control station 105 refers to any number of computing device(s) and/or other system(s) embodied in hardware, software, firmware, and/or the like that control, operate, receive and maintain data respective to, and/or monitor one or more vehicles 101. For example, a control station may include or embody a computing terminal by which one or more vehicles are remotely operated. In some embodiments, the control station includes one or more input devices 117' by which instructions or commands for controlling vehicles 101 are received by the control station via user input provided to an input device. For example, the input device 117' may receive user inputs for defining a payload of the vehicle 101 (e.g., passenger count, cargo amount, and/or the like), a weight of the vehicle, a travel pathway of the vehicle, and/or the like. In another example, the input device 117' may receive user inputs for controlling movement of the vehicle 101, such as inputs for controlling vertical and horizontal movement of the vehicle to direct the vehicle to a landing site 106. In another example, the input device 117' may receive user inputs for communicating with the vehicle 101, an apparatus 200, one or more UWB beacons 107 and/or the like. In some embodiments, the input device 117' includes one or more buttons, cursor devices, joysticks, touch screens, including three-dimensional or pressure-based touch screens, camera, finger-print scanners, accelerometer, retinal scanner, gyroscope, magnetometer, or other input devices. In some embodiments, the input device 117' includes one or more vehicle controls (e.g., joysticks, thumbsticks, yokes, steering wheels, accelerator control, thrust control, brake control, and/or the like) that enable an operator of the control station 105 to navigate the vehicle 101 toward or onto a landing site 106 based at least in part on renderings of landing guidance 115.

In some embodiments, the control station 105 includes one or more displays 119' by which data corresponding to one or more vehicles 101 and/or landing sites 106 is/are displayed to an operator of the control station. For example, the display 119' may include renderings of graphical user interfaces 121' comprising landing site mappings and landing guidance. In some embodiments, the display 119' includes a CRT (cathode ray tube), LCD (liquid crystal display) monitor, LED (light-emitting diode) monitor, touchscreen monitor, and/or the like, for displaying information/data to an operator of the control station 105. In some embodiments, the control station 105 provisions data to the apparatus 200. The provisioned data may include vehicle data 109, location data 111, UWB data 113, and/or the like. In some embodiments, functionality described as being performed by the apparatus 200 may instead be performed by the control station 105. For example, the control station 105 may include or embody a landing guidance system 103 and maintain, perform, or generate the data architectures, sequences, processes, or GUIs described herein and shown in the accompanying figures.

In some embodiments, the vehicle 101 includes one or more inertial measurement units (IMUs) 102. In some embodiments, an IMU 102 is configured to generate inertial measurements indicative of vehicle acceleration, rotation, orientation, angular velocity, and/or the like. In some embodiments, an IMU 102 includes one or more accelerometers, gyroscopes, and/or the like. In some embodiments, the apparatus 200 (or a position estimation module 112) is configured to generate an attitude angle, velocity increment, position increment, and/or the like based at least in part on the inertial measurements. In some embodiments, the vehicle 101 includes one or more compasses 104 configured to measure vehicle heading under static conditions, dynamic conditions, and/or the like. For example, the compass 104 may measure a planetary magnetic field to determine magnetic north relative to a heading of the vehicle 101. In some embodiments, the vehicle 101 includes one or more satellite-based positioning systems 108. In some embodiments, the satellite-based positioning system 108 is configured to receive signals from one or more satellites and generate a position of the vehicle 101 based thereon. For example, the satellite-based positioning system 108 may embody a global positioning system (GPS) circuit configured to receive ranging signals from a global navigation satellite system (GNSS) comprising a plurality of satellites. The GPS circuit may perform trilateration processes based at least in part on the ranging signals to estimate a current position of the vehicle 101. In some embodiments, the satellite-based positioning system 108 estimates a current latitude, longitude, elevation, altitude, depth, and/or the like, of the vehicle 101.

In some embodiments, the vehicle 101 includes a UWB transceiver 110 configured to receive and provide UWB signals from and to one or more UWB beacons 107. For example, the UWB transceiver 110 may embody a radio circuit configured to transmit and receive narrow pulses (e.g., pico-level pulse length) across a wide bandwidth (e.g., several gigahertz (GHz). Alternatively, in some embodiments, the vehicle 101 includes a UWB receiver circuit configured to receive signal from UWB beacons 107. In various embodiments, the UWB transceiver 110 is in a powered state throughout operation of the vehicle 101. Alternatively, in some embodiments, the UWB transceiver 110 is selectively activated in response to detection of signal from a UWB beacon 107 or the vehicle 101 moving within a predetermined range of a landing site 106.

In some embodiments, the vehicle 101 includes a position estimation module 112 configured to generate location data 111, UWB data 113, and/or the like based on measurements from the IMU 102, compass 104, satellite-based positioning system 108, UWB transceiver 110, and/or the like. For example, the position estimation module 112 may generate an estimated location of the vehicle 101 based at least in part on location data 111, UWB data 113, and/or the like. In some embodiments, the position estimation module 112 determines whether the vehicle 101 is within a predetermined range of a landing site 106 based at least in part on data from the IMU 102, compass 104, satellite-based positioning system 108, and/or the like. In some embodiments, in response to determining that the vehicle 101 is within range of the landing site 106, the position estimation module transitions the UWB transceiver 110 from a depowered state to a powered state. Alternatively, in some embodiments the position estimation module 112 transitions the UWB transceiver 110 between depowered and powered states in response to receiving instructions from a control station 105, apparatus 200, and/or the like.

In some embodiments, the vehicle 101, control station 105, and/or the like transition between a first navigational mode and a second navigational mode. The vehicle 101, control station 105, and/or the like may be transitioned to the first navigational node in response a current location of the vehicle being outside of a predetermined range of a landing site 106. The vehicle 101, control station 105, and/or the like may be transitioned to the second navigational mode in response to the current location of the vehicle being within the predetermined range of the landing site 106 or in response to detection of signal from one or more UWB beacons 107 located in an area proximate to the landing site 106. In some embodiments, in the first navigational mode, the position estimation module 112, control station 105, or apparatus 200 estimates a current location of the vehicle 101 relative to a landing site 106 based at least in part on location data from the IMU 102, compass 104, satellite-based positioning system 108, and/or the like (e.g., in the first navigational state, UWB data may not be used to estimate vehicle location). In some embodiments, in the second navigational mode, the position estimation module 112, control station 105, or apparatus 200 estimates a current location of the vehicle 101 relative to the landing site 106 based at least in part on UWB data derived from communication between the UWB transceiver 110 and one or more UWB beacons 107 located proximate to the landing site 106. In the second navigational mode, the UWB data may be used as an alternative to or in addition to the location data derived from the IMU 102, compass 104, satellite-based positioning system 108, and/or the like. For example, in the second navigational mode, the position estimation module 112, control station 105, or apparatus 200 may apply a greater weight value to UWB data as compared to a weight value applied to respective location data from one or more of the aforementioned sources such that location estimation and landing guidance processes prioritize UWB communications as the primary predictive input when the vehicle 101 is within the predetermined range of the landing site 106.

In some embodiments, the apparatus 200, vehicle 101, control station 105, UWB beacons 107, and/or the like, are communicable over one or more communications network(s), for example the communications network(s) 150. It should be appreciated that the communications network 150 in some embodiments is embodied in any of a myriad of network configurations. In some embodiments, the communications network 150 embodies a public network (e.g., the Internet). In some embodiments, the communications network 150 embodies a private network (e.g., an internal, localized, and/or closed-off network between particular devices). In some other embodiments, the communications network 150 embodies a hybrid network (e.g., a network enabling internal communications between particular connected devices and external communications with other devices). In some embodiments, the communications network 150 embodies a satellite-based communication network. Additionally, or alternatively, in some embodiments, the communications network 150 embodies a radio-based communication network that enables communication between the apparatus 200 and the vehicle 101. For example, the apparatus 200 may provision landing guidance 115 to and receive location data 111 and UWB data 113 from a control station 105, vehicle 101, and/or the like, via a transponder, communication gateway, and/or the like. The communications network 150 in some embodiments may include one or more transponders, satellites, base station(s), relay(s), router(s), switch(es), cell tower(s), communications cable(s) and/or associated routing station(s), and/or the like. In some embodiments, the communications network 150 includes one or more user-controlled computing device(s) (e.g., a user owner router and/or modem) and/or one or more external utility devices (e.g., Internet service provider communication tower(s) and/or other device(s)).

Each of the components of the system communicatively coupled to transmit data to and/or receive data from one another over the same or different wireless or wired networks embodying the communications network 150. Such configuration(s) include, without limitation, a wired or wireless Personal Area Network (PAN), Local Area Network (LAN), Metropolitan Area Network (MAN), Wide Area Network (WAN), satellite network, radio network, and/or the like. Additionally, while FIG. 1 illustrate certain system entities as separate, standalone entities communicating over the communications network 150, the various embodiments are not limited to this particular architecture. In other embodiments, one or more computing entities share one or more components, hardware, and/or the like, or otherwise are embodied by a single computing device such that connection(s) between the computing entities are over the communications network 150 are altered and/or rendered unnecessary.

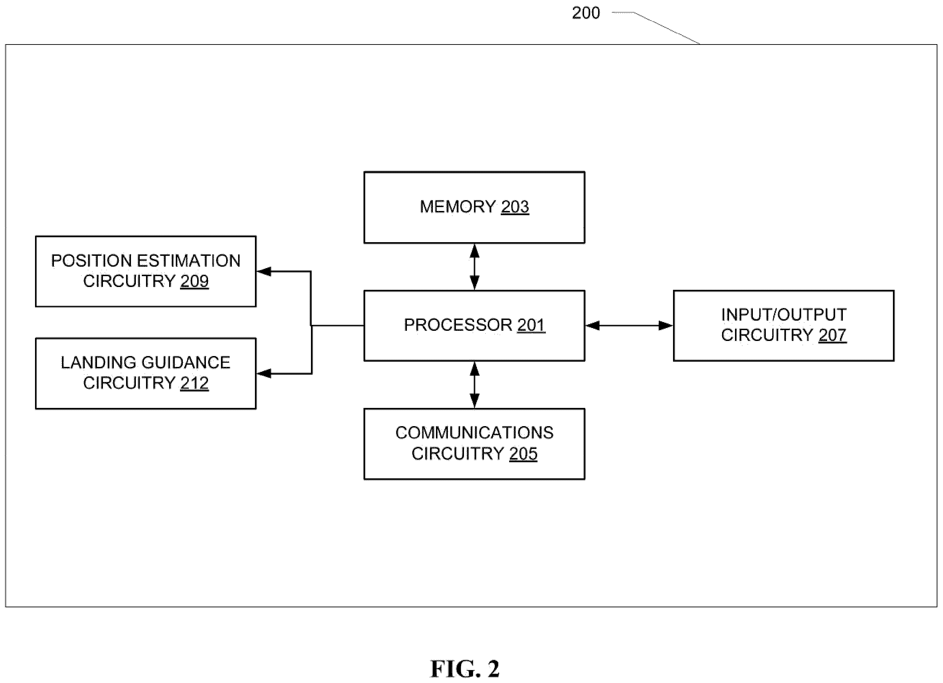

FIG. 2 illustrates a block diagram of an example apparatus 200 that may be specially configured in accordance with at least some example embodiments of the present disclosure. The apparatus 200 may carry out functionality and processes described herein to obtain location data and UWB data, generate respective landing guidance based at least in part on the location data and UWB data, cause rendering of GUIs comprising the landing guidance, and/or the like. In some embodiments, the apparatus 200 includes a processor 201, memory 203, communications circuitry 205, input/output circuitry 207, position estimation circuitry 209, and landing guidance circuitry 212. In some embodiments, the apparatus 200 is configured, using one or more of the processor 201, memory 203, communications circuitry 205, input/output circuitry 207, position estimation circuitry 209, and/or landing guidance circuitry 212, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, controlling, modifying, restoring, processing, displaying, rendering, commanding, storing, determining, creating/generating, predicting, monitoring, evaluating, comparing, and/or similar terms used herein interchangeably. In one embodiment, these functions, operations, and/or processes may be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Additionally, or alternatively, in some embodiments, other elements of the apparatus 200 provide or supplement the functionality of another particular set of circuitry. For example, the processor 201 in some embodiments provides processing functionality to any of the sets of circuitry, the memory 203 provides storage functionality to any of the sets of circuitry, the communications circuitry 205 provides network interface functionality to any of the sets of circuitry, and/or the like.

In some embodiments, the processor 201 (and/or co-processor or any other processing circuitry assisting or otherwise associated with the processor) is/are in communication with the memory 203 via a bus for passing information among components of the apparatus 200. In some embodiments, for example, the memory 203 is non-transitory and may include, for example, one or more volatile and/or non-volatile memories. In other words, for example, the memory 203 in some embodiments includes or embodies an electronic storage device (e.g., a computer readable storage medium). In some embodiments, the memory 203 is configured to store information, data, content, applications, instructions, or the like, for enabling the apparatus 200 to carry out various functions in accordance with example embodiments of the present disclosure (e.g., estimating vehicle position, generating landing guidance, generating GUIs, and/or the like). In some embodiments, the memory 203 is embodied as a data store 120 as shown in FIG. 1 and described herein. In some embodiments, the memory 203 includes vehicle data 109, location data 111, UWB data 113, landing guidance 115, and/or the like, as further architected in FIG. 3 and described herein.

The processor 201 may be embodied in a number of different ways. For example, in some embodiments, the processor 201 includes one or more processing devices configured to perform independently. Additionally, or alternatively, in some embodiments, the processor 201 includes one or more processor(s) configured in tandem via a bus to enable independent execution of instructions, pipelining, and/or multithreading. The use of the terms "processor" and "processing circuitry" should be understood to include a single core processor, a multicore processor, multiple processors internal to the apparatus 200, and/or one or more remote or "cloud" processor(s) external to the apparatus 200.

In an example embodiment, the processor 201 is configured to execute instructions stored in the memory 203 or otherwise accessible to the processor. Additionally, or alternatively, the processor 201 in some embodiments is configured to execute hard-coded functionality. As such, whether configured by hardware or software methods, or by a combination thereof, the processor 201 represents an entity (e.g., physically embodied in circuitry) capable of performing operations according to an embodiment of the present disclosure while configured accordingly. Additionally, or alternatively, as another example in some example embodiments, when the processor 201 is embodied as an executor of software instructions, the instructions specifically configure the processor 201 to perform the algorithms embodied in the specific operations described herein when such instructions are executed.

As one particular example embodiment, the processor 201 is configured to perform various operations associated with generating landing guidance for instructing navigation of a vehicle to a landing site. In some embodiments, the processor 201 includes hardware, software, firmware, and/or the like, that store vehicle data, location data, and/or UWB data, cause rendering of GUIs at one or more vehicles, control stations, and/or the like. For example, the processor 201 may cause rendering of a GUI on a display onboard a vehicle or a display of a control station, where the GUI comprises precise landing guidance for assisting a vehicle operator in navigating a vehicle to a landing site.

In some embodiments, the apparatus 200 includes input/output circuitry 207 that provides output to a user (e.g., an operating entity of a vehicle or control station) and, in some embodiments, receives an indication of a user input. For example, in some contexts, the input/output circuitry 207 provides output to and receives input from one or more control stations, vehicles, and/or the like. In some embodiments, the input/output circuitry 207 is in communication with the processor 201 to provide such functionality. The input/output circuitry 207 may comprise one or more user interface(s) and in some embodiments includes a display that comprises the interface(s) rendered as a web user interface, an application user interface, a user device, a backend system, or the like. In some embodiments, the input/output circuitry 207 also includes a keyboard, a mouse, a joystick, a touch screen, touch areas, soft keys a microphone, a speaker, and/or other input/output mechanisms. The processor 201 and/or input/output circuitry 207 comprising the processor may be configured to control one or more functions of one or more user interface elements through computer program instructions (e.g., software and/or firmware) stored on a memory accessible to the processor 201 (e.g., memory 203, and/or the like). In some embodiments, the input/output circuitry 207 includes or utilizes a user-facing application to provide input/output functionality to a display of a vehicle, control station, or other display associated with a user.

In some embodiments, the apparatus 200 includes communications circuitry 205. The communications circuitry 205 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 205 includes, for example, a network interface for enabling communications with a wired or wireless communications network, such as the network 150 shown in FIG. 1 and described herein. Additionally, or alternatively in some embodiments, the communications circuitry 205 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 205 includes circuitry for interacting with the antenna(s) and/or other hardware or software to cause transmission of signals via the antenna(s) or to handle receipt of signals received via the antenna(s). In some embodiments, the communications circuitry 205 enables transmission to and/or receipt of data from a vehicle, control station, and/or other external computing devices in communication with the apparatus 200.

The position estimation circuitry 209 includes hardware, software, firmware, and/or a combination thereof, that generate an estimated position of one or more vehicles 101. For example, in some contexts, the position estimation circuitry 209 includes hardware, software, firmware, and/or the like, that generate an estimated position of a vehicle based at least in part on location data from a satellite-based position system, inertial measurement unit, compass, one or UWB devices, and/or the like. In some embodiments, the position estimation circuitry 209 is configured to apply respective weight values to subsets of location data to influence an impact value of the subset on an estimation of vehicle position. For example, the position estimation circuitry 209 may apply a greater weight value to UWB-based location data as compared to a weight value applied to satellite-based position data, inertial data, compass data, and/or the like. The position estimation circuitry 209 may estimate a vertical and horizontal orientation of a vehicle, vehicle speed (e.g., including airspeed, groundspeed, descent/ascent speed, and/or the like), vehicle heading, and/or the like. In some embodiments, the position estimation circuitry 209 includes a separate processor, specially configured field programmable gate array (FPGA), and/or a specially programmed application specific integrated circuit (ASIC).

The landing guidance circuitry 212 includes hardware, software, firmware, and/or a combination thereof, that generate landing guidance. For example, in some contexts, the landing guidance circuitry 212 includes hardware, software, firmware, and/or the like, that generates initial landing guidance based at least in part on location data comprising satellite-based location data, compass data, inertial measurement data, and/or the like. As another example, in some contexts, the landing guidance circuitry 212 includes hardware, software, firmware, and/or the like, that generates precise landing guidance based at least in part on data associated with UWB communication between a UWB beacon of a vehicle and a plurality of UWB beacons proximate to a landing site. In some embodiments, the position estimation circuitry 209 generates a current location of a vehicle based at least in part on location data, UWB data, and/or the like, and the landing guidance circuitry 212 generates initial landing guidance, precise landing guidance, and/or the like based at least in part on the current location. In some embodiments, the landing guidance circuitry 212, processor 201, and/or the like includes hardware, software, firmware, and/or the like, that apply respective weight values to location data and UWB data to prioritize the UWB data when generating precise landing guidance. In some embodiments, the landing guidance circuitry 212 generates a GUI comprising initial landing guidance, precise landing guidance, and/or the like. In some embodiments, the landing guidance circuitry 212 includes a separate processor, specially configured field programmable gate array (FPGA), and/or a specially programmed application specific integrated circuit (ASIC).

Additionally, or alternatively, in some embodiments, two or more of the processor 201, memory 203, communications circuitry 205, input/output circuitry 207, and/or landing guidance circuitry 212 are combinable. Additionally, or alternatively, in some embodiments, one or more of the sets of circuitry perform some or all of the functionality described associated with another component. For example, in some embodiments, two or more of the sets of circuitry 201-212 are combined into a single module embodied in hardware, software, firmware, and/or a combination thereof. Similarly, in some embodiments, one or more of the sets of circuitry, for example the memory 203, communication interface 205, and/or landing guidance circuitry 212 is/are combined with the processor 201, such that the processor 201 performs one or more of the operations described above with respect to each of these sets of circuitry 203-212.

### Example Data Architectures, Sequences, and Graphical User Interfaces of the Disclosure

Having described example systems and apparatuses in accordance with embodiments of the present disclosure, example architectures of data, example sequences, and example GUIs in accordance with the present disclosure will now be discussed. In some embodiments, the systems and/or apparatuses described herein maintain data environment(s) that enable the sequences and GUIs in accordance with the data architectures described herein. For example, in some embodiments, the systems and/or apparatuses described herein function in accordance with the data architectures, sequences, and GUIs depicted and described herein with respect to FIGS. 4-6 are performed or maintained via the apparatus 200, where the apparatus 200 may embody a landing guidance system 103, position estimation module 112, control station 105, and/or the like.

FIG. 3. illustrates an example data architecture 300 in accordance with at least some example embodiments of the present disclosure. In some embodiments, vehicle data 109 includes one or more travel pathways 301, vehicle types 302, vehicle weights 303, passenger counts 305, and/or the like. In some embodiments, the travel pathway 301 indicates a course of movement for a vehicle 101. For example, the travel pathway 301 may indicate an origin, a destination, and a course of movement for traversing from the origin to the destination. The destination may embody a landing site 106 as shown in FIG. 1 and described herein. In some embodiments, the travel pathway 301 includes or is associated with a landing site identifier 304 that uniquely identifies a particular landing site 106 for the vehicle 101.

In some embodiments, the vehicle type 302 indicates a mission, category, configuration, and/or the like of a vehicle 101. For example, the vehicle type 302 may indicate whether the vehicle 101 is associated with reconnaissance, agriculture, cargo transportation, passenger transportation, filming, recreation, and/or the like. As another example, the vehicle type 302 may indicate that the vehicle is a fixed-wing vehicle, single rotor vehicle, hybrid vertical takeoff and landing (VTOL), multirotor vehicle, micro-vehicle, nano-vehicle, and/or the like. In various embodiments, different vehicle types 302 are associated with different landing guidance policies. For example, a vehicle 101 associated with a hybrid VTOL classification may be associated with a lower landing speed and higher landing angle as compared to a second vehicle 101 associated with a fixed-wing classification. In some embodiments, the vehicle weight 303 includes a base weight of the vehicle 101 and a weight of a payload carried by the vehicle 101 (e.g., cargo weight, passenger weight, and/or the like). In some embodiments, the passenger count 305 indicates a quantity of passengers aboard the vehicle 101. In some embodiments, the apparatus 200 associates a greater passenger count 305 is associated with a lower maximum landing speed and landing angle. For example, a passenger count of 8 passengers may be associated with a lower landing speed and landing angle as compared to a passenger count of 2 passengers. In some embodiments, the apparatus 200 associates different landing speeds, landing angles, vehicle weights, vehicle types, and/or the like with different trajectories for safely and efficiently navigating to a landing site. The apparatus 200 may generate and provision precise landing guidance 321 based at least in part on vehicle data 109.

In some embodiments, location data 111 includes inertial measurement data 307, compass data 309, satellite-based location data 311, image data 313, low detail map data 116, high detail map data 118, and/or the like. In some embodiments, inertial measurement data 307 includes data generated by one or more IMUs of a vehicle 101. For example, inertial measurement data 307 may include measurements of vehicle acceleration, rotation, orientation, angular velocity, and/or the like. In some embodiments, compass data 309 includes data generated by one or more compasses of a vehicle 101. For example, compass data 309 may include one or more vehicle headings, such as a vehicle heading under static conditions, dynamic conditions, and/or the like. In some embodiments, satellite-based location data 311 includes data generated by one or more satellite-based positioning systems of a vehicle 101. For example, satellite-based location data 311 may include a satellite identifier, almanac data, ephemeris data, and/or the like receive from one or more satellites. As another example, satellite-based location data 311 may include a vehicle longitude, latitude, altitude, elevation, and/or the like that is generated based at least in part on data received from a plurality of satellites. In some embodiments, image data 313 includes data from one or more cameras of a vehicle 101. For example, image data 313 may include one or more image captures, scans, video recordings, and/or the like.

In some embodiments, UWB data 113 includes time-difference-of-arrival (TODA) values 315 associated with UWB pulses from a plurality of UWB beacons. In some embodiments, UWB data 113 includes respective beacon identifiers 317 for a plurality of beacons. In some embodiments, a beacon identifier 317 is associated with a landing site identifier 304 such that detection of UWB data for a particular UWB beacon may be indexed to a particular landing site 106. In some embodiments, landing guidance 115 includes initial landing guidance 319 and precise landing guidance 321. In some embodiments, the initial landing guidance 319 is generated based at least in part on the location data 111. In some embodiments, the precise landing guidance 321 is generated based at least in part on the UWB data 113. Additionally, in some embodiments, the precise landing guidance 321 is generated based at least in part on location data 111. In some embodiments, the generation of precise landing guidance 321 includes applying respective weight values 320A, 320B to the UWB data 113 and location data 111. When applied, the weight values 320A, 320B may control a level of contribution of the corresponding data to a predicted current location and/or trajectory of a vehicle. In some embodiments, the weight value 320A is greater than the weight value 320B such that the UWB data 113 is prioritized (e.g., allocated greater contribution) in generating precise landing guidance 321. In doing so, the present method, apparatus, and computer program product may achieve centimeter-level accuracy in estimating vehicle location and, as a result, generate more precise trajectories for directing navigation of a vehicle 101 to a landing site 106 as compared to existing approaches (e.g., which are typically limited to the use of satellite-based location data or compass data to estimate vehicle positions). In some embodiments, the precise landing guidance 321 is generated further based at least in part on vehicle data 109. For example, the precise landing guidance 321 may be generated based at least in part on UWB data 113, a passenger count 305, a vehicle weight 303, a vehicle type 302, and/or the like.

In some embodiments, initial landing guidance 319 includes a low detail mapping of an area comprising a current location of the vehicle 101. In some embodiments, the initial landing guidance 319 includes a trajectory through the area to a second area comprising a landing site 106. In some embodiments, precise landing guidance 321 includes a three-dimensional mapping of an area comprising a current location of the vehicle 101, a landing site 106, a plurality of UWB beacons 107 and a plurality of structures, where a subset of the plurality of structures comprises the landing site and at least a subset of the plurality of UWB beacons. For example, the initial landing guidance 319 may include a topographic map and the precise landing guidance may comprise a photogrammetry map comprising light detection and ranging (LiDAR) data. In some embodiments, the precise landing guidance 321 comprises a trajectory through said area. The trajectory may direct to a respective surface of one or more structures in the area that comprises the landing site 106 and at least a subset of a plurality of UWB beacons 107 located proximate to the landing site. In some embodiments, the rendering of the precise landing guidance 321 includes a coloration scheme in which one or more structures are rendered in a particular color to indicate presence of the landing site 106 or one or more UWB beacons 107 located proximate to the landing site. In some embodiments, the precise landing guidance 321 comprises a landing speed, a landing angle, and/or the like.

FIG. 4 illustrates an example sequence 400 for generating initial landing guidance precise landing guidance. In various embodiments, the sequence 400 is performed by an apparatus 200 as shown in FIGS. 1-2 and described herein. Alternatively, in some embodiments, the sequence 400 is performed by a control station 105. In some embodiments, the sequence 400 includes a first subsequence 403 for generating initial landing guidance to instruct navigation of a vehicle toward an area comprising a landing site 106. In various embodiments, the sequence 400 includes a second subsequence 403 for generating precise landing guidance to instruct navigation of the vehicle to the landing site upon the vehicle moving within a predetermined range of the landing site (or area comprising the landing site) or establishing UWB communication with one or UWB beacons 107A, 107B, 107C, 107D located proximate to the landing site 106.

In some embodiments, the first subsequence 403 embodies a pre-assistant navigation mode of generating and providing initial landing guidance to an operator of a vehicle 101. In some embodiments, the first subsequence 403 is performed while the vehicle 101 is beyond a predetermined range of a landing site 106. For example, the apparatus 200 may perform the subsequence 403 while the vehicle 101 is beyond 200 meters (or another suitable value) from the landing site 106. In some embodiments, the first subsequence 403 the apparatus 200 generating initial landing guidance based at least in part on inertial measurement (IM) data 307, compass data 309, and satellite-based location data 311, which may comprise global positioning system (GPS) data in some contexts. In the first subsequence 403, the accuracy of estimating a current location of the vehicle may be within approximately 100 centimeters, and the location data may include one or more errors due to signal reflection, signal absorption, or other interferences caused by structures in the environment surrounding the vehicle 101. In some embodiments, the first subsequence 403 includes the apparatus 200 causing rendering of a GUI 121 on a display of a computing device in control of the vehicle 101 (e.g., a display 119 of a landing guidance system 103, display 119' of a control station 105 and/or the like), where the GUI 121 comprises the initial landing guidance. The initial landing guidance may include a topographic map of an area comprising a current location of the vehicle 101.

In some embodiments, the second subsequence 406 embodies a precise-assistant navigation mode of generating and providing precise landing guidance to the operator of the vehicle 101 upon the vehicle moving within the predetermined range of the landing site 106. For example, the apparatus 200 may perform the subsequence 406 while the vehicle 101 is within 200 meters of the landing site 106. In some embodiments, the second subsequence 406 includes the apparatus 200 generating precise landing guidance based at least in part on UWB data associated with UWB communication between a UWB transceiver 110 of the vehicle 101 with the plurality of UWB beacons 107A, 107B, 107C, 107D located proximate to the landing site 106. In some embodiments, the apparatus 200 generates an updated current location of the vehicle 101 based at least in part on comparison of respective TODA values obtained from the communication between the UWB transceiver 110 and the UWB beacons 107A, 107B, 107C, 107D. In the second subsequence 406, the accuracy of estimating a current location of the vehicle may be within approximately 10 centimeters, and the UWB data may demonstrate reduced vulnerability to signal reflection, signal absorption, and other interferences.

In some embodiments, the second subsequence 406 includes the apparatus 200 updating the GUI 121 based at least in part on the precise landing guidance. For example, the apparatus 200 may update the GUI 121 to include a three-dimensional mapping of an area comprising an updated current location of the vehicle 101, the landing site 106, and one or more structures comprising the landing site 106 and/or plurality of beacons 107A, 107B, 107C, 107D. The rendering of the precise landing guidance may further comprise a trajectory through the area that directs to a respective surface one or more structures that comprise the landing site 106 and at least a subset of the plurality of UWB beacons 107A, 107B, 107C, 107D located proximate to the landing site. In some embodiments, the surface is rendered in a particular color to visually indicate that the corresponding structure comprises the landing site 106. In some embodiments, the updated GUI 121 includes a landing speed, landing angle, time-to-landing, and/or the like.

FIG. 5 illustrates a computing device 500 having rendered thereon an example GUI 121A. In some embodiments, the computing device 500 embodies a display of a computing device onboard a vehicle 101. For example, in an aerial context, the computing device 600 may embody a display within a cockpit of an aerial vehicle. In some embodiments, the computing device 500 embodies a display of a control station 105 as described herein. In various embodiments, the landing guidance system 103 (e.g., embodied by one or apparatuses 200) causes rendering of the GUI 121A on the computing device 500. In some embodiments, the GUI 121 comprises initial landing guidance 502 for instructing navigation of a vehicle 101 to an area comprising a landing site 106. In some embodiments, the initial landing guidance 502 embodies a low detail mapping of an area comprising a current location of the vehicle 101. For example, the mapping may be a topographic or orthomosaic map of an area comprising the current location of the vehicle 101. Additionally, or alternatively, the mapping may comprise a video feed from one or more cameras of the vehicle 101, and the GUI 121A may embody a heads-up-display (HUD) rendered over the video feed.

In some embodiments, the initial landing guidance 502 includes a landing site distance 506 that is representative of a distance between a current location of the vehicle 101 and the landing site 106. For example, as shown in FIG. 5, the landing site distance 506 may be 268 meters (m). In some embodiments, the initial landing guidance 502 includes a landing site direction 507 that is representative of a direct heading, bearing, and/or the like to the landing site 106. The landing site direction 507 may include an angular value, clock value, and/or the like that instructs orientation of the vehicle 101 toward the landing site 106. In some embodiments, the initial landing guidance 502 includes a compass 508 that indicates a current heading of the vehicle 101 relative to magnetic north. In some embodiments, the initial landing guidance 502 includes a current speed 510 that represents a current airspeed, ground speed, true speed, and/or the like of the vehicle 101. In some embodiments, the initial landing guidance 502 includes a vehicle altitude 512. In some embodiments, the initial landing guidance 502 includes a trajectory 515 for directing navigation of the vehicle 101 to an area 514 comprising the landing site 106.

FIG. 6 illustrates a computing device 601 having rendered thereon an example GUI 121B. In some embodiments, the computing device 600 embodies a display of a computing device onboard a vehicle 101. For example, in an aerial context, the computing device 600 may embody a display within a cockpit of an aerial vehicle. In some embodiments, the computing device 600 embodies a display of a control station 105 as described herein. In various embodiments, the landing guidance system 103 (e.g., embodied by one or apparatuses 200) causes rendering of the GUI 121B on the computing device 600. In some embodiments, the GUI 121 comprises precise landing guidance 602 for instructing navigation of a vehicle 101 to a landing site 106. In some embodiments, the apparatus 200 updates the GUI 121A of FIG. 5 to the GUI 121B of FIG. 6 in response to the vehicle 101 moving within a predetermined range of an area comprising the landing site 106. For example, the apparatus 200 updates the GUI 121A to the GUI 121B in response to a current location of the vehicle 101 being within 200 meters (or another suitable value) of the landing site 106. Additionally, or alternatively, in some embodiments, the apparatus 200 updates the GUI 121A to the GUI 121B in response to detecting a UWB signal from one or more of a plurality of UWB beacons located proximate to the landing site 106 via communication between a UWB transceiver of the vehicle 101 and the plurality of UWB beacons located proximate to the landing site.

In some embodiments, the rendering of the precise landing guidance 602 comprises a three-dimensional mapping of the area comprising the current location of the vehicle 101. In some embodiments, the mapping embodies a photogrammetry map of the area including three-dimensional representations of structures within the area (e.g., infrastructure, trees, other vehicles, persons, and/or the like). For example, the mapping may comprise LiDAR data associated with the area, where the rendered LiDAR data indicates three-dimensional geometry of structures in the area. In some embodiments, the precise landing guidance 602 comprises a trajectory 605 through the area. The trajectory 605 may direct to a respective surface of one or more structures 606 that comprise the landing site 106 and one or more UWB beacons located proximate to the landing site. In some embodiments, in the GUI 121B, a respective structure 606 that comprises the landing site 106 is rendered in a particular color to visually indicate the present of the landing site, one or more beacons located proximate to the landing site, and/or the like.

In some embodiments, the precise landing guidance 602 comprises a landing site distance 609. For example, in the GUI 121B, the landing site distance 609 may indicate that the vehicle 101 is 150 meters from the landing site 106. In some embodiments, the precise landing guidance 602 comprises a landing speed 611. For example, the precise landing guidance 602 may include a landing speed 611 of 30 mph or another suitable value. In some embodiments, the landing speed 611 is greater or lesser based at least in part on a vehicle type, vehicle weight, vehicle passenger count, and/or the like. In some embodiments, the precise landing guidance 602 comprises a time-to-landing 613 that represents an estimated interval between a current timestamp and an arrival time of the vehicle 101 at the landing site 106.

### Example Processes of the Disclosure

Having described example systems and apparatuses, data architectures, data flows, GUIs in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally, or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

FIG. 7 illustrates a flowchart depicting operations of an example process 700 for generating precise landing guidance in accordance with at least some example embodiments of the present disclosure. In some embodiments, the process 700 is embodied by computer program code stored on a non-transitory computer-readable storage medium of a computer program product configured for execution to perform the process as depicted and described. Additionally, or alternatively, in some embodiments, the process 700 is performed by one or more specially configured computing devices, such as apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described.

In some embodiments, the apparatus 200 is in communication with one or more internal or external apparatus(es), system(s), device(s), and/or the like, to perform one or more of the operations as depicted and described. For example, the apparatus 200 may communicate with one or more vehicles 101, control stations 105, and/or the like to perform one or more operations of the process 700.

At operation 703, the apparatus 200 includes means such as the position estimation circuitry 209, the landing guidance circuitry 212, the communications circuitry 205, the input/output circuitry 207, the processor 201, and/or the like, or a combination thereof, that obtain location data 111 associated with a vehicle 101. For example, the apparatus 200 may receive location data 111 from a vehicle 101, a computing device in control of the vehicle 101, such as a control station 105, and/or the like. In some embodiments, the location data includes satellite-based location data, compass data, inertial measurement data, image data, and/or the like. Additionally, in some embodiments, the apparatus 200 obtains vehicle data 109 associated with the vehicle 101. For example, the apparatus 200 may obtain a travel pathway indicative of a landing site 106 of the vehicle 101, a landing site identifier, a plurality of beacon identifiers associated with the landing site identifier, and/or the like. As another example, the apparatus 200 may obtain one or more vehicle types associated with the vehicle 101, a vehicle weight, a passenger count, and/or the like.

At operation 706, the apparatus 200 includes means such as the position estimation circuitry 209, the landing guidance circuitry 212, the communications circuitry 205, the input/output circuitry 207, the processor 201, and/or the like, or a combination thereof, that estimate a current location of the vehicle 101 based at least in part on the location data 111. For example, the apparatus 200 may estimate a current location of the vehicle 101 based at least in part on satellite-based location data, compass data, inertial measurement data, image data, and/or the like. Additionally, or alternatively, in some embodiments, the apparatus 200 receives a current location of the vehicle 101 from a control station 105, position estimation module 112, and/or the like. In some embodiments, the apparatus 200 generates a distance value between the estimated current location of the vehicle 101 and a landing site 106.

At operation 709, the apparatus 200 includes means such as the position estimation circuitry 209, the landing guidance circuitry 212, the communications circuitry 205, the input/output circuitry 207, the processor 201, and/or the like, or a combination thereof, that generate initial landing guidance based at least in part on the location data 111. For example, the apparatus 200 may generate initial landing guidance for instructing navigation of the vehicle 101 to an area comprising the landing site 106. In some embodiments, the apparatus 200 generates the initial landing guidance based at least in part on the location data 111 of operation 703, the estimated current location of the vehicle of operation 706, and/or the like.

At operation 712, the apparatus 200 includes means such as the position estimation circuitry 209, the landing guidance circuitry 212, the communications circuitry 205, the input/output circuitry 207, the processor 201, and/or the like, or a combination thereof, that cause rendering of a GUI on a display of a computing device in control of the vehicle 101. For example, the apparatus 200 may cause rendering of a GUI on a display onboard the vehicle 101, said display being accessible to an onboard operator of the vehicle 101. As another example, the apparatus 200 may cause rendering of a GUI on a display of a control station associated with controlling the vehicle 101. In various embodiments, the GUI comprises a rendering of the initial landing guidance of operation 709. For example, the GUI may embody a GUI 121A as shown in FIG. 5 and described herein. In some embodiments, the GUI comprises a low detail mapping of an area comprising a current location of the vehicle based at least in part on the location data. In some embodiments, a subset of the area embodies a second area comprising the landing site 106. In some embodiments, the mapping embodies a topographic map. Alternatively, in some embodiments, the mapping comprises a respective video feed from one or more cameras of the vehicle 101.

At operation 715, the apparatus 200 optionally includes means such as the position estimation circuitry 209, the landing guidance circuitry 212, the communications circuitry 205, the input/output circuitry 207, the processor 201, and/or the like, or a combination thereof, that determine whether the vehicle 101 is within a predetermined range of the landing site 106. For example, the apparatus 200 may determine whether the vehicle 101 is withing the predetermined range of the landing site 106 based at least in part on the current location of the vehicle estimated at operation 706, the location data of operation 703, and/or the like. In one example, the predetermined range is 200 meters, 100 meters, or another suitable value. In some embodiments, the predetermined range embodies a vertical distance, a horizontal distance, and/or the like. In some embodiments, in response to determining that the vehicle 101 is located within the predetermined range of the landing site 106, the process 700 proceeds to operation 718. In some embodiments, in response to determining that the vehicle 101 is located outside the predetermined range of the landing site 106, the process 700 proceeds to operation 706 such that the operations 706-715 may be repeated until the vehicle 101 is determined to be within the predetermined range.

At operation 718, the apparatus 200 includes means such as the position estimation circuitry 209, the landing guidance circuitry 212, the communications circuitry 205, the input/output circuitry 207, the processor 201, and/or the like, or a combination thereof, that determine whether UWB signal from one or more UWB beacons proximate to the landing site 106 has been detected at the vehicle 101. For example, the apparatus 200 may determine whether the UWB transceiver of the vehicle 101 has received respective UWB signal from one or more UWB beacons within the area comprising the landing site 106. The apparatus 200 may receive an indication of UWB signal receipt from the vehicle 101, a control station 105, and/or the like. In some embodiments, in response to detecting a UWB signal from one or more UWB beacons located proximate to the landing site 106, the process 700 proceeds to operation 721. In some embodiments, in response to a failure to detect UWB signal, the process 700 proceeds to operation 706 such that operations 706, 709, 712, 718 and, optionally, 715 are repeated until UWB signal is detected via communication between the UWB transceiver of the vehicle 101 and one or more of the plurality of UWB beacons located proximate to the landing site 106.

At operation 721, the apparatus 200 includes means such as the position estimation circuitry 209, the landing guidance circuitry 212, the communications circuitry 205, the input/output circuitry 207, the processor 201, and/or the like, or a combination thereof, that estimate an updated current location of the vehicle 101. For example, the apparatus 200 may generate an updated current location of the vehicle 101 based at least in part on the UWB communication between the UWB transceiver of the vehicle 101 and the plurality of UWB beacons located proximate to the landing site 106 and/or additional UWB beacons located within an area comprising the landing site. In some embodiments, the apparatus 200 generates the updated current location of the vehicle 101 further based at least in part on additional location data 111. For example, the apparatus 200 may receive continuous or iterative sets of location data 111 and, at operation 724, process one or more sets of location data as an additional input to estimating the updated current location of the vehicle 101. In some embodiments, the apparatus 200 applies a first weight value to respective UWB data 113 associated with the UWB communication between the UWB transceiver of the vehicle 101 and the plurality of beacons. In some embodiments, the apparatus 200 applies a second weight value to the additional location data. In various embodiments, the first weight value represents a greater impact value than the second weight value such that the UWB data 113 provides a greater predictive contribution to estimating the current location of the vehicle 101 at operation 721 and/or generating precise landing guidance at operation 724.

At operation 724, the apparatus 200 includes means such as the position estimation circuitry 209, the landing guidance circuitry 212, the communications circuitry 205, the input/output circuitry 207, the processor 201, and/or the like, or a combination thereof, that generate precise landing guidance for the vehicle 101 respective to the landing site 106. For example, in response to detecting the UWB signal, the apparatus 200 may generate precise landing guidance for the vehicle 101 respective to the landing site 106 based at least in part on UWB data 113 associated with the UWB communication between the UWB transceiver of the vehicle and the plurality of UWB beacons located proximate to the landing site. In some embodiments, the apparatus 200 generates the precise landing guidance further based at least in part on additional location data 111. In such embodiments, the apparatus 200 may prioritize the UWB data 113 over the additional location data 111 by applying respective first and second weight values to the UWB data 113 and additional location data, where the first weight value represents a greater impact value than the second weight value. In some embodiments, the apparatus 200 generates the precise landing guidance further based at least in part on vehicle data 109 associated with the vehicle 101. For example, the apparatus may generate the precise landing guidance further based at least in part on a passenger count, a vehicle weight, one or more vehicle types, and/or the like.

In some embodiments, the precise landing guidance comprises a trajectory for directing navigation of the vehicle 101 to the landing site 106. For example, in some contexts, the precise landing guidance comprises a trajectory that may be presented to a vehicle operator to instruct the vehicle operator on a course of travel by which to navigate the vehicle 101 around a plurality of structures to a particular structure comprising the landing site 106. In some embodiments, the precise landing guidance includes an advisory landing speed, maximum landing speed, advisory landing angle, maximum landing angle, and/or the like.

At operation 727, the apparatus 200 includes means such as the position estimation circuitry 209, the landing guidance circuitry 212, the communications circuitry 205, the input/output circuitry 207, the processor 201, and/or the like, or a combination thereof, that update the rendering of the GUI of operation 712 based at least in part on the precise landing guidance of operation 724. For example, the apparatus 200 may update the rendering of the GUI based at least in part on the precise landing guidance. For example, the updated rendering of the GUI may embody the GUI 121B shown in FIG. 6 and described herein. In some embodiments, a rendering of the precise landing guidance on the GUI comprises a three-dimensional mapping of an area comprising an updated current location of the vehicle 101, the landing site 106, and a plurality of structures. In some embodiments, the mapping comprises a photogrammetry map. Additionally, in some embodiments, the photogrammetry map comprises LiDAR data indicative of structures, vehicles, subjects, objects, and/or the like within the area comprising the landing site 106.

In some embodiments, the rendering of the precise landing guidance on the GUI further comprises a trajectory through the area. In various embodiments, the trajectory directs to a respective surface of one or more structures that comprises the landing site 106 and at least a subset of the UWB beacons in communication with the UWB transceiver of the vehicle 101. In some embodiments, the apparatus 200 causes rendering of one or more structures in particular colors, patterns, and/or the like to indicate a presence of the landing site 106 and/or one or more UWB beacons at the corresponding structure. In some embodiments, the rendering of the precise landing guidance further comprises one or more landing speeds, landing angles, landing time intervals, and/or the like. In various embodiments, operations 724-727 are repeated throughout navigation of the vehicle 101 to the target site such that precise landing guidance may be continuously refreshed and rendered on the GUI.

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method, comprising:
generating initial landing guidance for a vehicle respective to a landing site based on location data associated with the vehicle;
rendering a graphical user interface (GUI) comprising the initial landing guidance on a display of a computing device associated with controlling the vehicle;
detecting an ultra-wideband (UWB) signal from at least one of a plurality of UWB beacons located proximate to the landing site via communication between at least one UWB transceiver of the vehicle and the plurality of UWB beacons located proximate to the landing site;
in response to detecting the UWB signal, generating precise landing guidance for the vehicle respective to the landing site based at least in part on the UWB communication between the at least one UWB transceiver of the vehicle and the plurality of UWB beacons located proximate to the landing site; and
updating the rendering of the GUI based at least in part on the precise landing guidance, wherein the precise landing guidance instructs navigation of the vehicle to the landing site.

2. The method of claim 1, wherein:
the GUI comprising the initial landing guidance comprises a mapping of an area comprising a current location of the vehicle based at least in part on the location data.

3. The method of claim 2, wherein:
a rendering of the precise landing guidance on the GUI comprises a three-dimensional mapping of a second area comprising an updated current location of the vehicle, the landing site, and a plurality of structures.

4. The method of claim 3, further comprising:
generating the updated current location of the vehicle and the precise landing guidance based at least in part on:
the UWB communication between the at least one UWB transceiver of the vehicle and the plurality of UWB beacons; and
additional location data associated with the vehicle.

5. The method of claim 4, further comprising:
applying a first weight value to respective UWB data associated with the UWB communication between the at least one UWB transceiver of the vehicle and the plurality of UWB beacons; and
applying a second weight value to the additional location data associated with the vehicle, wherein the first weight value represents a greater impact value than the second weight value.

6. The method of claim 3, wherein:
the rendering of the precise landing guidance on the GUI further comprises a trajectory through the second area, wherein:
the trajectory directs to a respective surface of a subset of the plurality of structures that comprises the landing site and at least a subset of the plurality of UWB beacons located proximate to the landing site.

7. The method of claim 6, wherein:
updating the GUI based at least in part on the precise landing guidance comprises rendering the subset of the plurality of structures in a particular color to indicate at least one of i) a presence of the landing site, or ii) the subset of the plurality of UWB beacons located proximate to the landing site.

8. The method of claim 1, wherein:
the location data comprises inertial measurement data.

9. The method of claim 1, further comprising:
generating the precise landing guidance for the vehicle respective to the landing site further based at least in part on a passenger count associated with the vehicle.

10. The method of claim 1, further comprising:
generating the precise landing guidance for the vehicle respective to the landing site further based at least in part on a weight associated with the vehicle.

11. The method of claim 1, further comprising:
generating the precise landing guidance for the vehicle respective to the landing site further based at least in part on a vehicle type associated with the vehicle.

12. An apparatus comprising at least one processor and at least one non-transitory memory having computer-coded instructions stored thereon that, in execution with at least one processor, cause the apparatus to:
generate initial landing guidance for a vehicle respective to a landing site based on location data associated with the vehicle;
render a graphical user interface (GUI) comprising the initial landing guidance on a display of a computing device associated with controlling the vehicle;
detect a UWB signal from at least one of a plurality of UWB beacons located proximate to the landing site via communication between at least one UWB transceiver of the vehicle and
the plurality of UWB beacons located proximate to the landing site;
in response to detecting the UWB signal, generate precise landing guidance for the vehicle respective to the landing site based at least in part on the UWB communication between the at least one UWB transceiver of the vehicle and the plurality of UWB beacons located proximate to the landing site; and
update the rendering of the GUI based at least in part on the precise landing guidance, wherein the precise landing guidance instructs navigation of the vehicle to the landing site.

13. The apparatus of claim 12, wherein:
the precise landing guidance comprises a landing speed.

14. The apparatus of claim 13, wherein:
the precise landing guidance further comprises a landing angle.

15. A computer program product comprising at least one non-transitory computer-readable storage medium having computer program code stored thereon that, in execution with at least one processor, is configured to:
generate initial landing guidance for a vehicle respective to a landing site based on location data associated with the vehicle;
render a graphical user interface (GUI) comprising the initial landing guidance on a display of a computing device associated with controlling the vehicle;
detect a UWB signal from at least one of a plurality of UWB beacons located proximate to the landing site via communication between at least one UWB transceiver of the vehicle in communication with the plurality of UWB beacons located proximate to the landing site;
in response to detecting the UWB signal, generate precise landing guidance for the vehicle respective to the landing site based at least in part on the UWB communication between the at least one UWB transceiver of the vehicle and the plurality of UWB beacons located proximate to the landing site; and
update the rendering of the GUI based at least in part on the precise landing guidance, wherein the precise landing guidance instructs navigation of the vehicle to the landing site.
